# EUROPÄISCHE PATENTSCHRIFT

(11) **EP 2 920 384 B1**
(45) Veröffentlichungstag und Bekanntmachung des Hinweises auf die Patenterteilung: **23.03.2016**
(21) Anmeldenummer: 13798606.3
(22) Anmeldetag: 19.11.2013
(51) Int. Cl.: E04G 21/32

(54) **BEFESTIGUNGSELEMENT FÜR DIE FIXIERUNG VON ANSCHLAGPUNKTEN UND/ODER STATISCHEN LASTEN AN METALLPROFILEN**
FASTENING ELEMENT FOR THE FIXING OF FASTENING POINTS AND/OR STATIC LOADS ON METAL PROFILES
ÉLÉMENT DE FIXATION POUR LA FIXATION DE POINTS D'ANCRAGE ET/OU DE CHARGES STATIQUES SUR DES PROFILÉS MÉTALLIQUES

(30) Priorität: 19.11.2012 AT 4472012
(43) Veröffentlichungstag der Anmeldung: 23.09.2015
(73) Patentinhaber: Safe Patentverwaltungs - Und Verwertungs GmbH, 4582 Spital/Pyhrn (AT)
(72) Erfinder: AICHHOLZER, Sepp Anton, A-9800 Spittal/Drau (AT); CANINS, Karl-Heinz, A-9620 Hermagor (AT); REITEGGER, Rudolf, A-8911 Admont (AT)
(74) Vertreter: KLIMENT & HENHAPEL
(86) Internationale Anmeldenummer: PCT/EP2013/074154
(87) Internationale Veröffentlichungsnummer: WO 2014/076298

(56) Entgegenhaltungen:
- EP-A1- 0 708 206
- EP-A1- 0 708 206
- EP-A1- 2 292 874
- EP-A1- 2 292 874
- EP-A1- 2 447 445
- EP-A1- 2 447 445
- CH-A1- 704 527
- CH-A1- 704 527
- DE-U1-202005 000 694
- DE-U1-202005 000 694
- FR-A3- 2 956 586
- FR-A3- 2 956 586
- GB-A- 2 322 109
- GB-A- 2 322 109
- KR-A- 20060 100 968
- KR-A- 20060 100 968

## Beschreibung

### GEBIET DER ERFINDUNG

Die Erfindung betrifft ein Befestigungselement für die Fixierung von Anschlagpunkten, die insbesondere zur Aufnahme von dynamischen Lasten geeignet sind, und/oder von statischen Lasten an Metallprofilen, insbesondere von Metallständerwänden, Vorsatzschalen oder abgehängten Decken, umfassend eine winkelförmige Lasche mit einem ersten Schenkel und einem zweiten Schenkel, wobei der erste Schenkel und der zweite Schenkel eine L-Form ausbilden, wobei am ersten Schenkel mindestens ein Verbindungsmittel zur Verbindung des Anschlagpunkts und/oder der statischen Last mit dem Befestigungselement angeordnet ist und das mindestens eine Verbindungsmittel vorzugsweise ein Innengewinde aufweist, wobei der zweite Schenkel zumindest abschnittsweise mit einer Wellung versehen ist, wobei die Wellung eine Amplitude aufweist, die aus einer Ebene des zweiten Schenkels in einer auf diese Ebene normal stehenden Richtung herausragt und durch Wellenberge und Wellentäler gebildet wird, wobei Punkte gleicher Phase der zugrundeliegenden Welle auf Geraden liegen, sodass die Erstreckung der Wellenberge und Wellentäler geradlinig ist.

### STAND DER TECHNIK

Absturzsicherungen dienen zur Vermeidung von Abstürzen, bei denen die Sturzhöhe zu Verletzungen führen kann. Dies kann durch den Einsatz von Sicherungsmitteln, wie beispielsweise von Gerüsten, Fangnetzen oder Seilsicherungen, erfolgen, wobei für diese Sicherungsmittel Anschlagpunkte vorgesehen werden. Hierbei wird üblicherweise die Norm EN 795 zur Berechnung bzw. Auslegung von Anschlagpunkten und deren Befestigung herangezogen.

Es sind am Markt keine Systeme bekannt, die es ermöglichen, Anschlagpunkte der Klasse A1 nach EN 795 in oder an Metallständerwänden, Vorsatzschalen oder abgehängten Decken sicher zu montieren, da die normgemäß zulässigen Konsol- oder Hängelasten für diese Bauteile weit geringer sind als die bei der Sicherung von Personen gegen Absturz entsprechend EN 795 auftretenden statischen und dynamischen Punktlasten. Metallständerwände, Vorsatzschalen und abgehängte Decken sind vergleichsweise leichte und fragile βauteile, die von ihrer Art her grundsätzlich nur raumtrennend oder bekleidend, jedenfalls aber nicht maßgeblich statisch tragend ausgelegt sind. Entsprechend ist die Einleitung von horizontalen oder vertikalen Einzellasten nur in beschränktem Umfang möglich, und statische sowie dynamische Lasten, wie sie bei der Sicherung von Personen gegen Absturz normgemäß auftreten, können in diese Bauteile nicht ohne weiteres eingleitet werden.

Der Hauptgrund hierfür ist, dass Anschlagpunkte zur Sicherung von Personen gegen Absturz überwiegend mit den jeweiligen Unterkonstruktionen starr verbunden sind, die im Falle der oben genannten Bauteile aus Metallprofilen bestehen. Die Anschlagpunkte selbst lassen bei Belastung mit wenigen Ausnahmen keine maßgebliche Verformung zu, was zu erheblichen Reaktionskräften und zu unzulässig großen Verformungen in den Metallprofilen führt.

Aus der CH 704527 A1 ist ein Befestigungselement für die Fixierung von Anschlagpunkten mit streifenförmigen Abschnitten bekannt, welche ein Auge aufweisen, durch das ein Karabinerhaken hindurchführbar ist, wobei das Befestigungselement weiters mäandrierende Abschnitte aufweist, die z.B. mittels einer Schraubverbindung an einem Profil oder Falz befestigt werden können. Bei einem Sturz werden die mäandrierenden Abschnitte auseinander gezogen, wodurch eine Dämpfung des Sturzes erzielt wird. CH 704527 offenbart alle Merkmale der Präambel des Anspruchs 1.

Weiters ist aus der FR 2956586 A3 ein Befestigungselement für die Anbringung auf Dächern bekannt, welches eine balgartige Struktur aufweist. Das Befestigungselement umfasst eine gefaltete U-förmige Platte, welche durch zwei mittels einer Mittelplatte verbundene und gegenüberliegend angeordnete Platten mit Nuten gebildet wird, wobei die beiden mit Nuten versehenen Platten gegenüber der Mittelplatte Schaufeln mit Öffnungen zur Anordnung des Befestigungselements auf einem Dach aufweisen. Darüber hinaus weist das Befestigungselement ein auf der Mittelplatte angeordnetes Element zur Befestigung eines Sicherungsseils auf.

### AUFGABE DER ERFINDUNG

Es ist daher Aufgabe der Erfindung, eine Möglichkeit zur Fixierung von Anschlagpunkten, die insbesondere zur Aufnahme von dynamischen Lasten geeignet sind, und/oder von statischen Lasten an Metallprofilen, insbesondere von Metallständerwänden, Vorsatzschalen oder abgehängten Decken, zu schaffen, die verhindert, dass es im Falle von bei der Sicherung von Personen gegen Absturz entsprechend EN 795 auftretenden statischen und for allem dynamischen Punktlasten zu Überlastung und unzulässig großer Verformung der Metallprofile kommt.

### DARSTELLUNG DER ERFINDUNG

Kern der Erfindung zur Lösung obiger Aufgabe ist es, ein Befestigungselement für die Fixierung von Anschlagpunkten, die insbesondere zur Aufnahme von dynamischen Lasten geeignet sind, und/oder von statischen Lasten an Metallprofilen, insbesondere von Metallständerwänden, Vorsatzschalen oder abgehängten Decken, gemäß Anspruch 1, zur Verfügung zu stellen, das eine energieabsorbierende Funktionalität aufweist. Die bei gesicherten Abstürzen auftretenden dynamischen Kräfte können somit soweit gedämpft werden, dass die verbleibenden Lasten zu keiner Überbeanspruchung und unzulässig großen Verformung der Metallprofile führen. Die dynamischen Kräfte werden vorzugsweise über Anschlagpunkte eingeleitet, wobei ein Anschlagpunkt streng genommen selbst natürlich auch eine - äußerst geringe - statische Last darstellt. Unter statischer Last sind jedoch weit größere Lasten gemeint, die noch nicht zu einer unzulässig großen Verformung des Metallprofils führen, beispielsweise ein Boiler oder ein Waschbecken, genauer gesagt deren Gewicht.

Zur Dämpfung der dynamischen Kräfte umfasst das erfindungsgemäße Befestigungselement eine winkelförmige Lasche mit einem ersten Schenkel und einem zweiten Schenkel, wobei der Querschnitt der winkelförmigen Lasche L-förmig ausfällt, wobei die beiden Schenkel einen, vorzugsweisen rechten, Winkel einschließen.

Zur Verbindung von Anschlagpunkten oder einer statischen Last weist der erste Schenkel mindestens ein Verbindungsmittel auf. Da die Verbindung mit dem Anschlagpunkt üblicherweise durch Verschraubung hergestellt wird, weist das Verbindungsmittel vorzugsweise ein Innengewinde auf. Insbesondere für die Aufnahme von statischen Lasten bzw. Hängelasten ist es aber natürlich auch denkbar, statt einer Verschraubung einen Bajonettverschluss oder dergleichen vorzusehen.

Der zweite Schenkel dient zur Verbindung des Befestigungselements mit dem Metallprofil. Typischerweise werden Metallprofile, die gemäß DIN 18182-1 oder DIN EN 14195 ausgeführt sind, verwendet. Diese Metallprofile weisen üblicherweise Löcher auf, mittels derer die Metallprofile miteinander verbunden bzw. verschraubt werden können, ohne dass auf der Baustelle Löcher gebohrt werden müssten. Sogenannte UA-Metallprofile, die bei Metallständerwänden als Aussteifung eingesetzt werden, weisen entlang der Längsrichtung des jeweiligen Metallprofils zumindest eine Reihe von Langlöchern auf. In Abhängigkeit von der Höhe des Metallprofils kann eine weitere Reihe von Langlöchern vorhanden sein, wobei zwischen den beiden Langlochreihen eine Reihe von Rundlöchern angeordnet sein kann. Die Blechstärke der UA-Metallprofile beträgt üblicherweise einheitlich 2 mm.

Zur Verbindung des Befestigungselements mit dem Metallprofil weist der zweite Schenkel zwei Öffnungen auf, durch die eine Verschraubung unter Ausnutzung der Löcher, die als Langlöcher ausgeführt sind, des Metallprofils erfolgen kann.

Um das Befestigungselement mit der Funktionalität eines Energieabsorbers auszustatten, weist der zweite Schenkel zumindest abschnittsweise eine Wellung auf. Diese erleichtert im Falle einer, insbesondere dynamischen, Belastung ein plastisches Verformen des zweiten Schenkels, indem die Wellung ähnlich einer Ziehharmonika gestaucht und gestreckt werden kann. Durch diese plastische Verformung wird Energie absorbiert, wodurch die auf das Metallprofil wirkende Last verringert wird.

Entsprechend ist erfindungsgemäß ein Befestigungselement für die Fixierung von Anschlagpunkten, die insbesondere zur Aufnahme von dynamischen Lasten geeignet sind, und/oder von statischen Lasten an Metallprofilen, insbesondere von Metallständerwänden, Vorsatzschalen oder abgehängten Decken, gemäss Anspruch 1 vorgesehen.

Die Metallprofile, insbesondere UA-Metallprofile, können typischerweise einfach, zweifach oder dreifach beplankt werden. Die Beplankung besteht dabei im Allgemeinen aus Gipskartonplatten oder Gipsfaserplatten mit einer Stärke von jeweils 1,25 cm bis 1,5 cm. Die Beplankung wird dabei mit einer sich aus der Anzahl der Lagen ergebenden tatsächlichen Gesamtstärke an einer Stirnseite der Metallprofile, üblicherweise durch Verschraubung, befestigt. Um die Position des Anschlagpunktes in Relation zur sich tatsächlich ergebenden Gesamtstärke der Beplankung einstellen zu können, ist das erfindungsgemäße Befestigungselement mit den zwei Langlöchern im zweiten Schenkel versehen.

Die Langlöcher ermöglichen ein Verschieben des Befestigungselements in einer Richtung parallel zur (Gesamt-)Stärke der Beplankung bzw. in einer Richtung normal auf die Stirnseite des Metallprofils, bis die gewünschte Position gefunden ist. In dieser Position wird das Befestigungselement anschließend durch Festziehen der durch die Langlöcher des Befestigungselements und die Löcher, vorzugsweise Langlöcher, des Metallprofils geführten Schrauben fixiert.

Die oben genannte Energieabsorption durch Stauchen oder Strecken der Wellung des zweiten Schenkels bewirkt eine Erhöhung oder Erniedrigung einer Amplitude der Wellung, wobei die Amplitude aus einer Ebene des zweiten Schenkels herausragt. Wellenberge kennzeichnen die Amplitude in einer von der Ebene des zweiten Schenkels weg weisenden Richtung, Wellentäler kennzeichnen die Amplitude in entgegengesetzter Richtung.

Für eine einfache Herstellung der Wellung erstrecken sich die Wellenberge und Wellentäler der Wellung des erfindungsgemäßen Befestigungselementes geradlinig. Mit anderen Worten liegen Punkte gleicher Phase der zugrundeliegenden Welle auf Geraden. Die Erstreckungsrichtung der Wellenberge und Wellentäler ist parallel zu diesen Geraden.

Die beiden Schenkel weisen jeweils eine Innenfläche auf, wobei sich die Innenflächen entlang einer Kante schneiden. Dabei sind die Innenflächen so zueinander orientiert, dass sie einen Winkel, der in einer Normalebene zur Kante gemessen wird, von kleiner als 180° einschließen.

Um eine besonders einfach herstellbare Wellung zu gewährleisten, ist es bei einer bevorzugten Ausführungsform des erfindungsgemäßen Befestigungselements vorgesehen, dass die Wellung eine konstante Wellenlänge aufweist. Selbstverständlich ist es aber auch denkbar, eine sich ändernde Wellenlänge vorzusehen, um beispielsweise eine Progression in der Dämpfung der bei einem Absturz auftretenden Kräfte realisieren zu können.

Um besonders viel Energie absorbieren zu können, ist es bei einer weiteren bevorzugten Ausführungsform des erfindungsgemäßen Befestigungselements vorgesehen, dass sich die Wellung über den gesamten zweiten Schenkel erstreckt. Neben der plastischen Verformung der Wellung des zweiten Schenkels kann noch ein weiterer Mechanismus zur Energieabsorption genutzt werden. Hierbei findet gegen die zwischen dem zweiten Schenkel und dem Metallprofil wirkende Reibungskraft eine Drehung des Befestigungselements statt, wenn eine Last mit hinreichend großer Richtungskomponente parallel zur Kante wirkt. Auf diese Weise wird zu absorbierende Energie in Wärme umgewandelt und die Last auf das Metallprofil verringert.

Um eine solche Drehung zu ermöglichen, ist es bei einer besonders bevorzugten Ausführungsform des erfindungsgemäßen Befestigungselements vorgesehen, dass die zwei Langlöcher gekrümmt sind, wobei die Krümmung des einen Langlochs entgegengesetzt zur Krümmung des anderen Langlochs ist.

Um gleichzeitig die oben genannte Möglichkeit zur Verschiebung des Befestigungselements beizubehalten, ist es bei einer weiteren bevorzugten Ausführungsform des erfindungsgemäßen Befestigungselements vorgesehen, dass die zwei Langlöcher jeweils entlang eines gedachten Kreisbogens verlaufen und dass die gedachten Kreisbögen keinen gemeinsamen Kreismittelpunkt haben. Entsprechend weisen die gedachten Kreisbögen vergleichsweise große Krümmungsradien auf.

Dabei können die Langlöcher so angeordnet sein, dass Verlängerungen eines gedachten Kreisbogens nicht Verlängerungen des anderen gedachten Kreisbogens schneiden, sondern den anderen gedachten Kreisbogen selbst. Die Anordnung der Langlöcher ist üblicherweise so, dass von den gedachten Kreisbögen samt Verlängerungen aufgrund der genannten Schnitte eine gemeinsame Fläche eingeschlossen wird. Daher ist es bei einer weiteren bevorzugten Ausführungsform des erfindungsgemäßen Befestigungselements vorgesehen, dass Verlängerungen der gedachten Kreisbögen jeweils den anderen gedachten Kreisbogen und/oder jeweils die Verlängerung des anderen gedachten Kreisbogens schneiden.

Ist das Befestigungselement am Metallprofil montiert und ist noch keine dynamische Belastung aufgetreten, so verläuft die Kante üblicherweise parallel zur Stirnseite des Metallprofils. Bei Belastung wirken typischerweise Kräfte mit einer dominierenden Richtungskomponente parallel zur Stirnseite des Metallprofils und damit parallel zur Kante. Diese parallele Richtungskomponente bewirkt die oben beschriebene Drehung des Befestigungselements. Spätestens nach der erfolgten Drehung weist die Last eine Richtungskomponente auf, die normal auf die Kante steht. Um nun eine Energieabsorption durch Stauchen oder Strecken der Wellung zu ermöglichen, sollte die Erstreckungsrichtung der Wellenberge und Wellentäler der Wellung jedenfalls nicht normal auf die Kante stehen. Entsprechend ist es bei dem erfindungsgemäßen Befestigungselements vorgesehen, dass die Wellung eine Amplitude aufweist, die aus einer Ebene des zweiten Schenkels herausragt und durch Wellenberge und Wellentäler gebildet wird, wobei die Erstreckung der Wellenberge und Wellentäler geradlinig ist, und dass die Erstreckungsrichtung der Wellenberge und Wellentäler mit einer Kante einen in der Ebene des zweiten Schenkels gemessenen Winkel ungleich 90° einschließt oder parallel zur Kante verläuft, wobei sich entlang der Kante eine Innenfläche des ersten Schenkels und eine Innenfläche des zweiten Schenkels schneiden und wobei die Innenflächen einen in einer auf die Kante normal stehenden Ebene gemessenen Winkel kleiner als 180° einschließen.

Spätestens nach der Drehung des Befestigungselements liegt daher folgende Situation vor: Mit Blickrichtung entlang der parallel zur Kante verlaufenden Richtungskomponente der Last kommt es in einem ersten Verformungsbereich des zweiten Schenkels zu einem Strecken der Wellung und in einem darauf folgenden zweiten Verformungsbereich des zweiten Schenkels zu einem Stauchen der Wellung. Jenes Langloch, das im ersten Verformungsbereich liegt, wird im Folgenden als erstes Langloch bezeichnet, jenes Langloch, das im zweiten Verformungsbereich liegt, als zweites Langloch.

Bei der Verschraubung des zweiten Schenkels mit dem Metallprofil wird der zweite Schenkel mit der Wellung gegen das Metallprofil gepresst. Wird eine hinreichend große Mutter oder Beilagscheibe bzw. ein hinreichend großer Schraubenkopf der zur Verschraubung eingesetzten Schraube gewählt, so kommt es im Bereich der Verschraubung zu einer elastischen Verformung des zweiten Schenkels, indem die Amplitude der Wellung gegenüber dem unverschraubten Zustand verringert wird. Typischerweise sollte für eine hinreichende Größe der Durchmesser der Mutter, der Beilagscheibe, oder des Schraubenkopfs - je nachdem, welcher dieser Teile den zweiten Schenkel kontaktiert - zumindest der halben Wellenlänge entsprechen. Daher ist es bei der Verwendung des erfindungsgemäßen Befestigungselements zur Fixierung von Anschlagpunkten, die insbesondere zur Aufnahme von dynamischen Lasten geeignet sind, und/oder von statischen Lasten an Metallprofilen, insbesondere von Metallständerwänden, Vorsatzschalen oder abgehängten Decken erfindungsgemäß vorgesehen, dass sich der zweite Schenkel bei einer Verschraubung mit dem Metallprofil elastisch verformt und die Amplitude gegenüber dem unverschraubten Zustand zumindest abschnittsweise reduziert wird.

Um einerseits die geforderte Elastizität und andererseits die notwendige plastische Verformbarkeit des zweiten Schenkels zu ermöglichen, ist es bei einer bevorzugten Ausführungsform des erfindungsgemäßen Befestigungselements vorgesehen, dass die winkelförmige Lasche aus Metall gefertigt ist.

Bei der oben beschriebenen Drehung des Befestigungselements fungiert die Schraube im zweiten Langloch als Drehpunkt und das erste Langloch als Führung. Wie oben erwähnt, wird hierbei Energie durch Umwandlung in Wärme abgebaut, da die Drehung unter Reibung stattfindet. Diese erste Drehung endet klarerweise, wenn das Ende des ersten Langlochs erreicht ist.

In Abhängigkeit der verbleibenden Last und der genauen Position der Schraube im zweiten Langloch kann es in weiterer Folge zu einer weiteren, zweiten Drehung kommen, wobei dann die Schraube im ersten Langloch als Drehpunkt fungiert. Diese zweite Drehung endet, wenn das Ende des zweiten Langlochs erreicht ist.

Schließlich kann es auch noch zu einem linearen Verrutschen des Befestigungselements entlang des Metallprofils kommen, wobei die Langlöcher des Metallprofils als Führung dienen. Auch hierbei wird Energie durch Umwandlung in Wärme abgebaut, da auch dieses Verrutschen unter Reibung zwischen dem zweiten Schenkel und dem Metallprofil stattfindet. Die genaue Abfolge der ersten Drehung, der zweiten Drehung des linearen Verrutschens sowie der plastischen Verformung durch Stauchen/Strecken der Wellung kann variieren, wobei Details - wie z.B. die Oberflächenbeschaffenheit des Metallprofils, das genaue Anzugsmoment der zur Verschraubung des zweiten Schenkels mit dem Metallprofil verwendeten Schrauben bzw. Muttern, die genauen Richtungskomponenten der angreifenden Last und deren zeitliche Entwicklung etc. - eine Rolle spielen. Die Steifigkeit der jeweiligen Beplankung spielt bei diesen Vorgängen ebenfalls eine Rolle, ist aber in obigen Überlegungen nicht berücksichtigt.

Wie bereits erwähnt, sind zur Verbindung des Anschlagpunkts mit dem Befestigungselement vorzugsweise Verbindungsmittel mit Innengewinde vorgesehen. Diese Verbindungsmittel müssen unbeweglich am ersten Schenkel fixiert sein, da sie nach Montage der Beplankung nicht mehr zugänglich sind. Als Verbindungsmittel eignen sich daher insbesondere Gewindehülsen, die am ersten Schenkel, beispielsweise durch Verschweißung, fixiert sind. Eine kostengünstige Alternative stellen Einpressmuttern dar. Entsprechend ist es bei einer bevorzugten Ausführungsform des erfindungsgemäßen Befestigungselements vorgesehen, dass an der Innenfläche des ersten Schenkels zwei Gewindehülsen oder Einpressmuttern als Verbindungsmittel fixiert sind.

Um eine optimale Übertragung der Last vom Anschlagpunkt bzw. der statischen Last auf das Befestigungselement zu ermöglichen, soll der Anschlagpunkt den ersten Schenkel bzw. das Befestigungselement möglichst flächig kontaktieren. Daher ist es bei einer weiteren bevorzugten Ausführungsform des erfindungsgemäßen Befestigungselements vorgesehen, dass am ersten Schenkel eine Anschlussplatte angeordnet ist, um ein planes Anliegen des Anschlagpunkts und/oder der statischen Last am Befestigungselement zu ermöglichen.

Die Anschlussplatte kann dabei als separat hergestelltes Teil am ersten Schenkel fixiert sein. Es ist aber selbstverständlich auch vorstellbar, dass in einer Platz sparenden Alternative die Anschlussplatte durch den ersten Schenkel selbst ausgebildet wird. Entsprechend ist es bei einer bevorzugten Ausführungsform des erfindungsgemäßen Befestigungselements vorgesehen, dass die Anschlussplatte vom ersten Schenkel ausgebildet wird.

Damit der Anschlagpunkt bzw. die statische Last mit den Innengewinden der Verbindungsmittel bei vorhandener Anschlussplatte verbunden werden kann, ist es bei einer bevorzugten Ausführungsform des erfindungsgemäßen Befestigungselements vorgesehen, dass die Anschlussplatte über den Innengewinden der Gewindehülsen oder Einpressmuttern jeweils eine Montageöffnung aufweist, um die Verbindung des Anschlagpunkts und/oder der statischen Last mit dem Befestigungselement durch Verschraubung zu ermöglichen. Um in diesem Falle eine Verschraubung ohne Verkanten zu ermöglichen, stehen die Achsen der Innengewinde normal auf die Anschlussplatte.

Eine optisch besonders ansprechende Lösung ist die versenkte Montage des Anschlagpunkts in einem dosenförmigen Behältnis. Daher ist es bei einer bevorzugten Ausführungsform des erfindungsgemäßen Befestigungselements vorgesehen, dass die Anschlussplatte an einer Rückseite eines dosenförmigen Behältnisses angeordnet ist oder diese Rückseite ausbildet, wobei das dosenförmige Behältnis weiters eine Vorderseite aufweist und wobei an der Vorderseite eine Öffnung angeordnet ist.

Das dosenförmige Behältnis erleichtert außerdem das Überspachteln des Befestigungselements. Hierfür wird in dem dosenförmigen Behältnis ein Montagekern, vorzugsweise aus Kunststoff, platziert, der das dosenförmige Behältnis ausfüllt und die Öffnung so verschließt, dass sich eine plane Vorderseite ergibt. Denkbar ist auch, dass der Montagekern aus einem nicht brennbaren Material der Klasse A1 nach ISO 1182 besteht, um einen Beitrag zum Feuerwiderstand der Gesamtkonstruktion zu leisten. Nach dem Überspachteln kann der Montagekern entfernt und der Anschlagpunkt montiert werden. Wird vorerst kein Anschlagpunkt benötigt, kann der Montagekern auch im dosenförmigen Behältnis verbleiben und übermalt werden, sodass das vorhandene Befestigungselement optisch nicht auffällt.

Das erfindungsgemäße Befestigungselement eignet sich nicht nur für die Fixierung von Anschlagpunkten zur Aufnahme von dynamischen Lasten. Das Befestigungselement kann auch statische Lasten aufnehmen, deren Größe so bemessen ist, dass plastische Verformungen, wie oben beschrieben, nicht auftreten. Solche statischen Lasten werden beispielsweise durch die Montage von Lüftungsleitungen, Klimageräten, Boilern oder Waschbecken am Befestigungselement erzeugt. Hierbei ist es möglich, den Montagekern im dosenförmigen Behältnis zu belassen, indem der Montagekern selbst aus druckfestem Material hergestellt ist, um sich durch Verschraubung einstellende Druckkräfte aufnehmen zu können. In diesem Fall weist der Montagekern vorzugsweise Pfropfen auf, die entfernt werden können, um den Zugang zu Gewindehülsen oder Einpressmuttern zu ermöglichen.

### KURZE BESCHREIBUNG DER FIGUREN

Die Erfindung wird nun anhand eines Ausführungsbeispiels näher erläutert. Die Zeichnungen sind beispielhaft und sollen den Erfindungsgedanken zwar darlegen, ihn aber keinesfalls einengen oder gar abschließend wiedergeben.

Dabei zeigt:
- Fig. 1: eine Seitenansicht eines erfindungsgemäßen Befestigungselements mit Sicht auf eine Innenfläche eines zweiten Schenkels des Befestigungselements
- Fig. 2: eine Seitenansicht des Befestigungselements aus Fig. 1 mit entgegengesetzter Blickrichtung
- Fig. 3: eine Aufsicht auf das Befestigungselement aus Fig. 1
- Fig. 4: eine Frontansicht des Befestigungselements aus Fig. 1 mit Blick auf ein dosenförmiges Behältnis des Befestigungselements
- Fig. 5: eine Frontansicht des Befestigungselements aus Fig. 1 mit Blick auf das dosenförmige Behältnis, wobei ein Anschlagpunkt montiert ist
- Fig. 6: eine Seitenansicht eines Metallprofils mit drei daran verschraubten Befestigungselementen aus Fig. 1, wobei jeweils ein anderer Abstand zwischen einer Vorderseite des jeweiligen dosenförmigen Behältnisses und einer Stirnseite des Metallprofils vorhanden ist
- Fig. 7: eine Seitenansicht analog zu Fig. 6, jedoch nur mit einem am Metallprofil verschraubten Befestigungselement, welches sich in einer gedrehten Position befindet

### WEGE ZUR AUSFÜHRUNG DER ERFINDUNG

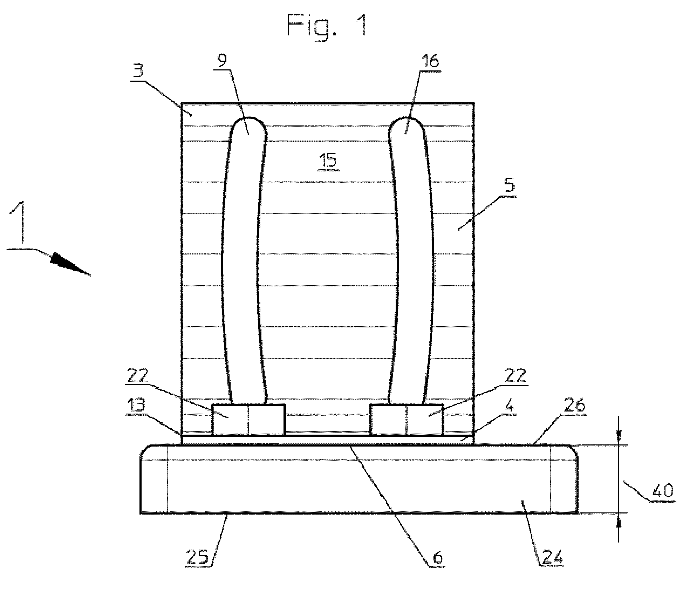

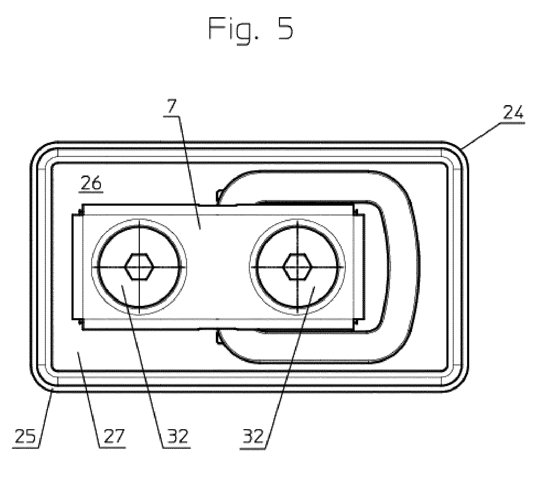

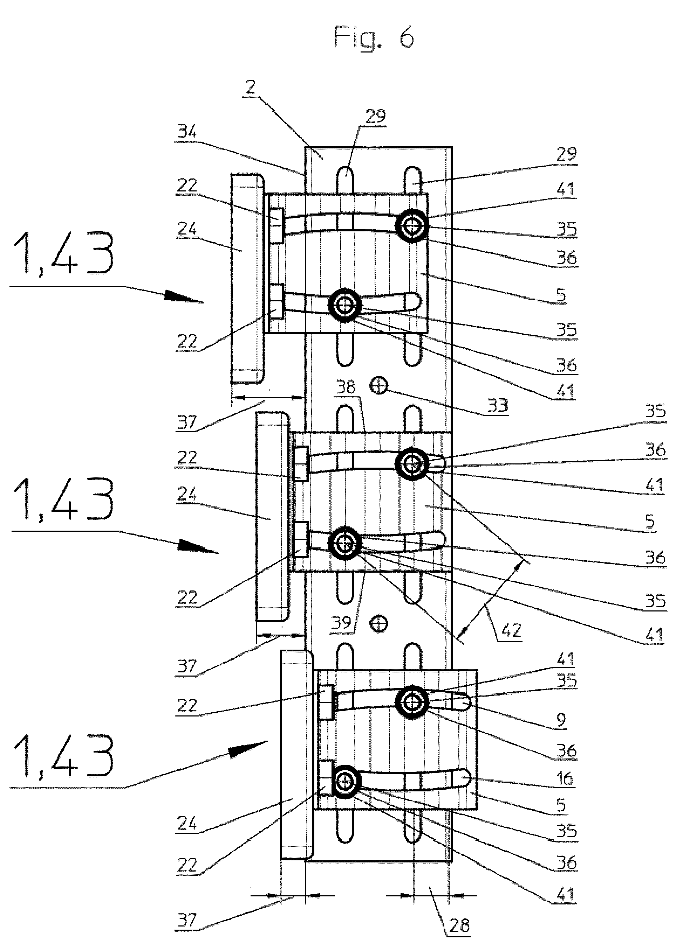

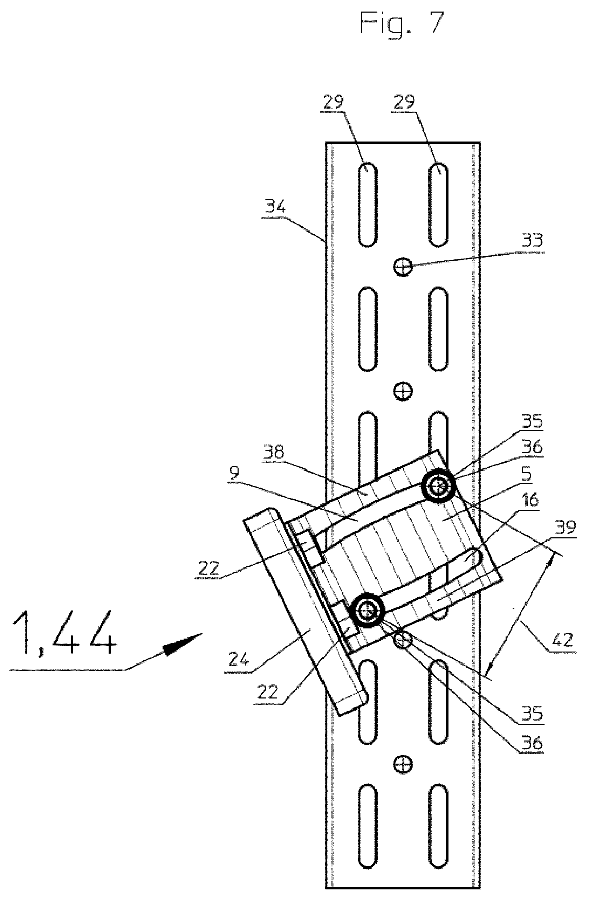

Die Seitenansicht der Fig. 1 zeigt ein Ausführungsbeispiel eines erfindungsgemäßen Befestigungselements 1 für die Fixierung eines Anschlagpunkts 7 (vgl. Fig. 5), der insbesondere zur Aufnahme von dynamischen Lasten geeignet ist, und/oder einer statischen Last an einem Metallprofil 2 (vgl. Fig. 6 und Fig. 7), insbesondere von Metallständerwänden, Vorsatzschalen oder abgehängten Decken. Das Befestigungselement 1 umfasst eine winkelförmige Lasche 3 mit einem ersten Schenkel 4 und einem zweiten Schenkel 5. Fig. 1 zeigt eine Aufsicht auf eine Innenfläche 15 des zweiten Schenkels 5. Deutlich zu erkennen sind ein erstes Langloch 9 und ein zweites Langloch 16 im zweiten Schenkel 5, die zur Befestigung der winkelförmigen Lasche 3 am Metallprofil 2 durch Verschraubung dienen.

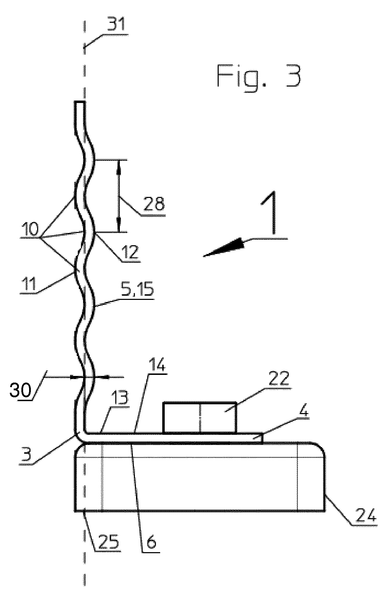

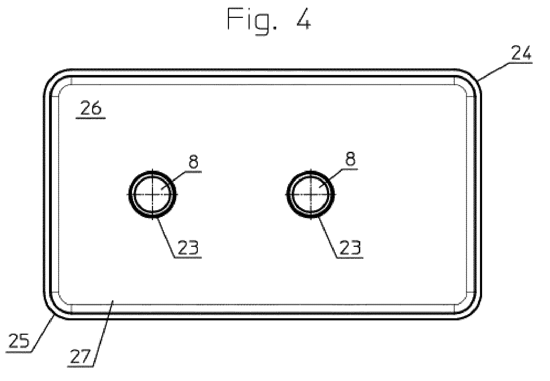

Der erste Schenkel 4 weist eine Innenfläche 14 (vgl. Fig. 3) auf, auf welcher zwei Einpressmuttern 22 fixiert sind. Diese dienen als Verbindungsmittel mit Innengewinde 8 (vgl. Fig. 4) für die Verbindung des Anschlagpunkts 7 mit dem Befestigungselement 1.

Um den Anschlagpunkt 7 versenkt montieren zu können, ist ein dosenförmiges Behältnis 24 vorgesehen, dessen Rückseite 26 von einer Anschlussplatte 6 ausgebildet wird. Die Anschlussplatte 6 garantiert wiederum ein planes Anliegen des Anschlagpunkts 7 und damit im Falle eines gesicherten Absturzes eine optimale Übertragung der Last an das Befestigungselement 1.

Das dosenförmige Behältnis 24 umfasst außerdem eine Vorderseite 25, die idealerweise bündig mit einer Oberfläche einer Beplankung (nicht dargestellt) des Metallprofils 2 abschließt und eine Öffnung 27 aufweist.

Eine Tiefe 40 des dosenförmigen Behältnisses 1 ergibt sich aus einem normal auf die Rückseite 26 gemessenen Abstand zwischen Rückseite 26 und Vorderseite 2. Diese Tiefe 40 gestattet die Aufnahme des Anschlagpunkts 7, ohne dass dieser von der Oberfläche der Beplankung (nicht dargestellt) absteht. Im gezeigten Ausführungsbeispiel erstreckt sich die Öffnung 27 im Wesentlichen über die gesamte Vorderseite 25, wie in der in Fig. 4 gezeigten Frontansicht des Befestigungselements 1 mit Blick auf das dosenförmige Behältnis 24 zu erkennen ist. In Fig. 4 sind außerdem Montageöffnungen 23 erkennbar, die über den Innengewinden 8 der Einpressmuttern 22 angeordnet sind, um eine problemlose Verschraubung des Anschlagpunkts 7 mit dem Befestigungselement 1 zu ermöglichen.

Fig. 5 zeigt eine Frontansicht des Befestigungselements 1 mit Blick auf das dosenförmige Behältnis 24 mit montiertem Anschlagpunkt 7. Der Anschlagpunkt 7 ist mit in die Innengewinde 8 der Einpressmuttern 22 passenden Schrauben 32 mit dem Befestigungselement 1 verbunden und dabei vollständig im dosenförmigen Behältnis 24 untergebracht.

Wenn das Befestigungselement 1 nicht genutzt wird, kann im dosenförmigen Behältnis 24 ein Montagekern (nicht dargestellt) angeordnet werden, der die Öffnung 27 vollständig verschließt und somit das Eindringen von Schmutz etc. in das dosenförmige Behältnis 24 verhindert. Vorzugsweise ist dieser Montagekern aus druckfestem Kunststoff gefertigt und kann auch überspachtelt, verputzt und übermalt werden.

Fig. 3 zeigt eine Aufsicht auf das Befestigungselement 1, in welcher die L-Form, die vom ersten Schenkel 4 und zweiten Schenkel 5 ausgebildet wird, besonders gut ersichtlich ist. Die Zeichenebene steht dabei normal auf die beiden Innenflächen 14, 15, welche einander in einer Kante 13 (vgl. auch Fig. 1) schneiden. Die Kante 13 steht dabei normal auf die Zeichenebene der Fig. 3. Im gezeigten Ausführungsbeispiel der Fig. 3 beträgt der in der Zeichenebene gemessene Winkel, den die Innenflächen 14, 15 einschließen, 90°. Im Allgemeinen ist dieser Winkel jedenfalls kleiner als 180°.

Weiters ist in Fig. 3 gut erkennbar, dass der zweite Schenkel 5 eine Wellung 10 mit Wellenbergen 11 und Wellentälern 12 aufweist. Im gezeigten Ausführungsbeispiel erstreckt sich die Wellung 10 über den gesamten zweiten Schenkel 5. Die Wellenberge 11 und Wellentäler 12 ragen aus einer Ebene 31 des zweiten Schenkels 5 heraus. Dabei kennzeichnen die Wellenberge 11 eine Amplitude 30 der Wellung 10 in einer von der Ebene 31 des zweiten Schenkels 5 weg weisenden Richtung, die erfindungsgemäß normal auf die Ebene 31 steht.

Die Wellentäler 12 kennzeichnen die Amplitude 30 in entgegengesetzter Richtung. Der Abstand zweier aufeinander folgender Wellenberge 11 bzw. zweier Wellentäler 12 definiert eine Wellenlänge 28, wobei dieser Abstand in der Ebene 31 und normal auf die Erstreckungsrichtung der Wellenberge 11 bzw. der Wellentäler 12 gemessen wird.

Im gezeigten Ausführungsbeispiel der Fig. 3 erstrecken sich die Wellenberge 11 und Wellentäler 12 geradlinig parallel zur Kante 13, d.h. deren Erstreckungsrichtung steht normal auf die Zeichenebene. Die Orientierung der Erstreckungsrichtung der Wellenberge 11 und Wellentäler 12 ist aber jedenfalls so gewählt, dass der mit der Kante 13 eingeschlossene Winkel, gemessen in der Ebene 31, ungleich 90° ist. Dies deshalb, da die Kante 13 üblicherweise parallel zu einer Stirnseite 34 (vgl. Fig. 6 und Fig. 7) des Metallprofils 2 verläuft, wenn das Befestigungselement 1 am Metallprofil 2 montiert und noch keine dynamische Belastung, insbesondere keine in der Norm EN 795 für Anschlagpunkte der Klasse A1 definierte Belastung, aufgetreten ist. Bei einem Lastfall mit hinreichend großer Richtungskomponente normal auf die Kante 13 bzw. normal auf die Erstreckungsrichtung der Wellenberge 11 und Wellentäler 12 des in Fig. 3 gezeigten Befestigungselements 1 kann eine plastische Verformung des zweiten Schenkels 5 durch Strecken oder Stauchen der Wellung 10 stattfinden. Beim Strecken verringert sich die Amplitude 30, beim Stauchen wird sie erhöht. Durch diese plastische Verformung kann Energie absorbiert und die auf das Metallprofil 2 wirkende Last verringert werden.

Fig. 6 zeigt eine Seitenansicht eines Metallprofils 2 mit drei daran montierten Befestigungselementen 1. Die Montage jedes Befestigungselements 1 erfolgt durch Verschraubung, wobei jeweils eine Schraube 35 in den Langlöchern 9, 16 der Befestigungselemente 1 angeordnet ist. Das Metallprofil 2 wiederum weist Langlöcher 29 auf, die im gezeigten Ausführungsbeispiel in zwei Reihen entlang der Längserstreckung des Metallprofils 2 angeordnet sind. Zwischen den beiden Reihen der Langlöcher 29 ist eine Reihe von Rundlöchern 33 angeordnet. Zur Verschraubung mit dem Befestigungselement 1 werden die Langlöcher 29 verwendet, d.h. jede Schraube 35 ist nicht nur in einem Langloch 9, 16 des Befestigungselements 1, sondern auch in einem Langloch 29 des Metallprofils 2 angeordnet.

Die Befestigungselemente 1 sind so am Metallprofil 2 befestigt, dass die Vorderseiten 25 der dosenförmigen Behältnisse 24 parallel zur Stirnseite 34 des Metallprofils 2 angeordnet sind. Die Langlöcher 9, 16 der Befestigungselemente 1 gestatten es, den Abstand 37 zwischen der jeweiligen Vorderseite 25 und der Stirnseite 34 einzustellen. In Fig. 6 wird dies anhand der drei Befestigungselemente 1 illustriert, wobei der Abstand 37 beim in der Zeichnung obersten Befestigungselement 1, am größten ist und beim in der Zeichnung untersten Befestigungselement 1 am geringsten. Beim in der Zeichnung mittleren Befestigungselement 1 liegt der Abstand 37 zwischen diesen beiden Extremwerten. Auf diese Weise können unterschiedliche Stärken der an der Stirnseite 34 montierten Beplankung (nicht dargestellt) berücksichtigt werden, sodass die Vorderseite 25 des dosenförmigen Behältnisses 24 bündig mit der Oberfläche der Beplankung (nicht dargestellt) abschließt.

Bei einem typischen dynamischen Lastfall verläuft die dominierende Richtungskomponente der Last parallel zur Stirnseite 34 des Metallprofils 2 und damit zunächst parallel zur Kante 13. Ist diese parallel zur Stirnseite 34 verlaufende Richtungskomponente der dynamischen Last hinreichend groß, so findet gegen die zwischen dem zweiten Schenkel 5 und dem Metallprofil 2 wirkende Reibungskraft eine Drehung des Befestigungselements 1 statt. Auf diese Weise wird zu absorbierende Energie in Wärme umgewandelt und die Last auf das Metallprofil 2 verringert.

Die Langlöcher 9, 16 der Befestigungselemente 1 sind zur Ermöglichung der Drehung gekrümmt ausgeführt. Entsprechend rutschen die Schrauben 35 nicht nur in den Langlöchern 9, 16 der Befestigungselemente 1, sondern auch in den Langlöchern 29 des Metallprofils 2, wenn die Befestigungselemente 1 normal zur Stirnseite 34 des Metallprofils 2 verschoben werden, um der Beplankungsstärke Rechnung zu tragen.

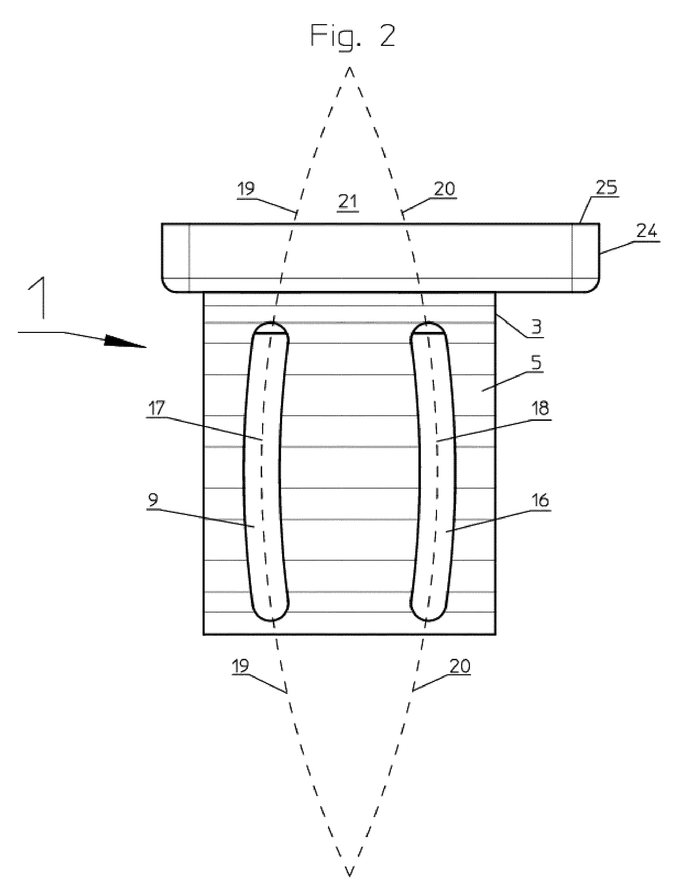

Fig. 2 zeigt eine weitere Seitenansicht des Befestigungselements 1, in der die gekrümmten Langlöcher 9, 16 besonders gut zu sehen sind. Das erste Langloch 9 verläuft entlang eines ersten gedachten Kreisbogens 17 (strichliert dargestellt). Das zweite Langloch 16 verläuft entlang eines zweiten gedachten Kreisbogens 18 (ebenfalls strichliert dargestellt). Der erste gedachte Kreisbogen 17 und der zweite gedachte Kreisbogen 18 weisen entgegengesetzte Krümmung auf, haben aber keinen gemeinsamen Mittelpunkt. Sie sind außerdem so angeordnet, dass sich Verlängerungen 19 des gedachten ersten Kreisbogens 17 mit Verlängerungen 20 des gedachten zweiten Kreisbogens 18 schneiden. Die Verlängerungen 19, 20 sind in Fig. 2 ebenfalls strichliert eingezeichnet. Somit wird von den Kreisbögen 17, 18 samt Verlängerungen 19, 20 eine gemeinsame Fläche 21 eingeschlossen. Diese liegt teilweise außerhalb des zweiten Schenkels 5.

Bei der Verschraubung des zweiten Schenkels 5 wird die Wellung 10 gegen das Metallprofil 2 gepresst, d.h. es liegt kein vollflächiger Kontakt zwischen dem zweiten Schenkel 5 und dem Metallprofil 2 vor. Mit einer Beilagscheibe 36, deren Durchmesser größer als die halbe Wellenlänge 28 ist, wird durch Anziehen einer Mutter 41 eine elastische Verformung der Wellung 10, zumindest im Bereich der jeweiligen Schraube 35, verursacht. Dabei wird die Wellung 10 wie eine Feder zusammengedrückt, d.h. die Amplitude 30 wird verringert. Um diese Elastizität einerseits und die notwendige plastische Verformbarkeit andererseits zu gewährleisten, ist die winkelförmige Lasche 3 aus Metall gefertigt.

Wie bereits oben beschrieben, kommt es bei einer dynamischen Last mit hinreichend großer Richtungskomponente parallel zur Stirnseite 34 zunächst zu einer Drehung des Befestigungselements 1. Genauer gesagt, kommt es zu einer ersten Drehung des Befestigungselements 1, wobei die Schraube 35 im zweiten Langloch 16 als Drehpunkt bzw. Drehachse fungiert und das erste Langloch 9 als Führung für die im Langloch 9 angeordnete Schraube 35. Hierbei wird Energie durch Umwandlung in Wärme abgebaut, da die erste Drehung unter Reibung zwischen dem zweiten Schenkel 5 und dem Metallprofil 2 stattfindet. Die erste Drehung endet klarerweise, wenn das Ende des ersten Langlochs 9 erreicht ist.

In Abhängigkeit der verbleibenden Last und der genauen Position der Schraube 35 im zweiten Langloch 16 kann es in weiterer Folge zu einer weiteren, zweiten Drehung kommen, wobei dann die Schraube 35, die im ersten Langloch 9 angeordnet ist und dessen Ende kontaktiert, als Drehpunkt bzw. Drehachse fungiert. Die zweite Drehung endet, wenn das Ende des zweiten Langlochs 16 erreicht ist, d.h. wenn die Schraube 35 im zweiten Langloch 16 dessen Ende kontaktiert. Es versteht sich, dass auch bei der zweiten Drehung Energie durch Umwandlung in Wärme abgebaut wird, da auch die zweite Drehung unter Reibung zwischen dem zweiten Schenkel 5 und dem Metallprofil 2 stattfindet.

Selbst wenn die dynamische Last ursprünglich keine Richtungskomponente normal zur Kante 13, sondern nur eine Richtungskomponente parallel zur Kante 13 aufgewiesen hat, so liegt nach der erfolgten Drehung eine Richtungskomponente der dynamischen Last normal zur Kante 13 vor.

Ist die normal auf die Kante 13 stehende Richtungskomponente der dynamischen Last hinreichend groß, so kann es zu einer plastischen Verformung durch Stauchen und/oder Strecken der Wellung 10 kommen. Beispielsweise kann es in einem ersten Verformungsbereich 38 des zweiten Schenkels 5 zu einem Strecken der Wellung 10 kommen und in einem zweiten Verformungsbereich 39 zu einem Stauchen der Wellung 10. Im Beispiel von Fig. 6 und Fig. 7 liegt jeweils das erste Langloch 9 im ersten Verformungsbereich 38 und das zweite Langloch 16 im zweiten Verformungsbereich 39.

Schließlich kann es in Abhängigkeit von der verbleibenden Last zu einem linearen Verrutschen des Befestigungselements 1 entlang des Metallprofils 2 kommen. Hierbei fungieren die Langlöcher 29 des Metallprofils 2 als Führungen, in denen sich die Schrauben 35 linear bewegen, bis sie ans Ende des jeweiligen Langlochs 29 stoßen. Aufgrund der Reibung zwischen dem zweiten Schenkel 5 und dem Metallprofil 2 wird auch bei diesem linearen Verrutschen Energie durch Umwandlung in Wärme abgebaut. Die genaue Abfolge der ersten Drehung, der zweiten Drehung des linearen Verrutschens sowie der plastischen Verformung durch Stauchen/Strecken der Wellung 10 kann variieren, wobei Details - wie z.B. die Oberflächenbeschaffenheit des Metallprofils 2, das genaue Anzugsmoment der zur Verschraubung des zweiten Schenkels 5 mit dem Metallprofil 2 verwendeten Schrauben 35 bzw. Muttern, die genauen Richtungskomponenten der angreifenden Last und deren zeitliche Entwicklung etc. - eine Rolle spielen.

Darüberhinaus sind die genauen anfänglichen Positionen der beiden Schrauben 35 maßgeblich. So kann es klarerweise zu keinem linearen Verrutschen kommen, wenn die beiden Schrauben 35 bereits in der Anfangsposition 43 an den Enden der jeweiligen Langlöcher 29 angeordnet sind.

Fig. 7 zeigt ein Befestigungselement 1, das aus einer Anfangsposition 43, die in Fig. 6 vom mittleren Befestigungselement 1 eingenommen wird, durch die erste und zweite Drehung sowie durch lineares Verrutschen in eine Endposition 44 gelangt ist. In dieser Endposition 44 ist ein Abstand 42 zwischen der Schraube 35 im ersten Langloch 9 und der Schraube 35 im zweiten Langloch 16 größer als in der Anfangsposition 43. Dieser Abstand 42 wird in der Ebene 31 des zweiten Schenkels 5 gemessen, die im Falle der Fig. 6 und Fig. 7 parallel zur Zeichenebene liegt.

### BEZUGSZEICHENLISTE

- 1: Befestigungselement
- 2: Metallprofil
- 3: Winkelförmige Lasche
- 4: Erster Schenkel der winkelförmigen Lasche
- 5: Zweiter Schenkel der winkelförmigen Lasche
- 6: Anschlussplatte
- 7: Anschlagpunkt
- 8: Innengewinde
- 9: Erstes Langloch
- 10: Wellung
- 11: Wellenberg
- 12: Wellental
- 13: Kante
- 14: Innenfläche des ersten Schenkels
- 15: Innenfläche des zweiten Schenkels
- 16: Zweites Langloch
- 17: Erster gedachter Kreisbogen
- 18: Zweiter gedachter Kreisbogen
- 19: Verlängerung des ersten gedachten Kreisbogens
- 20: Verlängerung des zweiten gedachten Kreisbogens
- 21: Eingeschlossene Fläche
- 22: Einpressmutter
- 23: Montageöffnung
- 24: Dosenförmiges Behältnis
- 25: Vorderseite des dosenförmigen Behältnisses
- 26: Rückseite des dosenförmigen Behältnisses
- 27: Öffnung
- 28: Wellenlänge
- 29: Langloch im Metallprofil
- 30: Amplitude
- 31: Ebene des zweiten Schenkels
- 32: Schraube zur Befestigung eines Anschlagpunkts
- 33: Rundloch im Metallprofil
- 34: Stirnseite des Metallprofils
- 35: Schraube zur Verschraubung des zweiten Schenkels mit dem Metallprofil
- 36: Beilagscheibe
- 37: Abstand zwischen Vorderseite des dosenförmigen Behältnisses und Stirnseite des Metallprofils
- 38: Erster Verformungsbereich des zweiten Schenkels
- 39: Zweiter Verformungsbereich des zweiten Schenkels
- 40: Tiefe des dosenförmigen Behältnisses
- 41: Mutter
- 42: Abstand der Schrauben zur Verschraubung des zweiten Schenkels mit dem Metallprofil
- 43: Anfangsposition
- 44: Endposition

## Patentansprüche

1. Befestigungselement (1) für die Fixierung von Anschlagpunkten (7), die insbesondere zur Aufnahme von dynamischen Lasten geeignet sind, und/oder von statischen Lasten an Metallprofilen (2), insbesondere von Metallständerwänden, Vorsatzschalen oder abgehängten Decken, umfassend eine winkelförmige Lasche (3) mit einem ersten Schenkel (4) und einem zweiten Schenkel (5), wobei der erste Schenkel (4) und der zweite Schenkel (5) eine L-Form ausbilden, wobei am ersten Schenkel (4) mindestens ein Verbindungsmittel (22) zur Verbindung des Anschlagpunkts (7) und/oder der statischen Last mit dem Befestigungselement (1) angeordnet ist und das mindestens eine Verbindungsmittel (22) vorzugsweise ein Innengewinde (8) aufweist, wobei der zweite Schenkel (5) zumindest abschnittsweise mit einer Wellung (10) versehen ist, wobei die Wellung (10) eine Amplitude (30) aufweist, die aus einer Ebene (31) des zweiten Schenkels (5) in einer auf diese Ebene (31) normal stehenden Richtung herausragt und durch Wellenberge (11) und Wellentäler (12) gebildet wird, wobei Punkte gleicher Phase der zugrundeliegenden Welle auf Geraden liegen, sodass die Erstreckung der Wellenberge (11) und Wellentäler (12) geradlinig ist, **dadurch gekennzeichnet, dass** die Erstreckungsrichtung der Wellenberge (11) und Wellentäler (12) mit einer Kante (13) einen in der Ebene (31) des zweiten Schenkels (5) gemessenen Winkel ungleich 90° einschließt oder parallel zur Kante (13) verläuft, wobei sich entlang der Kante (13) eine Innenfläche (14) des ersten Schenkels (4) und eine Innenfläche (15) des zweiten Schenkels (5) schneiden und wobei die Innenflächen (14, 15) einen in einer auf die Kante (13) normal stehenden Ebene gemessenen Winkel kleiner als 180° einschließen, und dass im zweiten Schenkel (5) zwei Öffnungen zur Verschraubung des zweiten Schenkels (5) mit einem Metallprofil (2) vorgesehen sind, die als Langlöcher (9, 16) ausgeführt sind.

2. Befestigungselement (1) nach Anspruch 1, **dadurch gekennzeichnet, dass** die Wellung (10) eine konstante Wellenlänge (28) aufweist.

3. Befestigungselement (1) nach einem der Ansprüche 1 bis 2, **dadurch gekennzeichnet, dass** sich die Wellung (10) über den gesamten zweiten Schenkel (5) erstreckt.

4. Befestigungselement (1) nach einem der Ansprüche 1 bis 3, **dadurch gekennzeichnet, dass** die zwei Langlöcher (9, 16) gekrümmt sind, wobei die Krümmung des einen Langlochs (9) entgegengesetzt zur Krümmung des anderen Langlochs (16) ist.

5. Befestigungselement (1) nach Anspruch 4, **dadurch gekennzeichnet, dass** die zwei Langlöcher (9, 16) jeweils entlang eines gedachten Kreisbogens (17, 18) verlaufen und dass die gedachten Kreisbögen (17, 18) keinen gemeinsamen Kreismittelpunkt haben.

6. Befestigungselement (1) nach Anspruch 5, **dadurch gekennzeichnet, dass** Verlängerungen (19, 20) der gedachten Kreisbögen (17, 18) jeweils den anderen gedachten Kreisbogen (17, 18) und/oder jeweils die Verlängerung (19, 20) des anderen gedachten Kreisbogens (17, 18) schneiden.

7. Befestigungselement (1) nach einem der Ansprüche 1 bis 6, **dadurch gekennzeichnet, dass** an der Innenfläche (14) des ersten Schenkels (4) zwei Gewindehülsen oder Einpreesmuttern (22) als Verbindungsmittel fixiert sind.

8. Befestigungselement (1) nach einem der Ansprüche 1 bis 7, **dadurch gekennzeichnet, dass** am ersten Schenkel (4) eine Anschlussplatte (6) angeordnet ist, um ein planes Anliegen des Anschlagpunkts (7) und/oder der statischen Last am Befestigungselement (1) zu ermöglichen.

9. Befestigungselement (1) nach Anspruch 8, **dadurch gekennzeichnet**, das die Anschlussplatte (6) vom ersten Schenkel (4) ausgebildet wird.

10. Befestigungselement (1) nach Anspruch 7 und einem der Ansprüche 8 bis 9, **dadurch gekennzeichnet, dass** die Anschlussplatte (6). über den Innengewinden (8) der Gewindehülsen oder Einpressmuttern (22) jeweils eine Montageöffnung (23) aufweist, um die Verbindung des Anschlagpunkts (7) und/oder der statischen Last mit dem Befestigungselement (1) durch Verschraubung zu ermöglichen.

11. Befestigungselement (1) nach einem der Ansprüche 8 bis 10, **dadurch gekennzeichnet, dass** die Anschlussplatte (6) an einer Rückseite (26) eines dosenförmigen Behältnisses (23) angeordnet ist oder diese Rückseite (26) ausbildet, wobei das dosenförmige Behältnis (23) weiters eine Vorderseite (25) aufweist und wobei an der Vorderseite (25) eine Öffnung (27) angeordnet ist.

12. Befestigungselement (1) nach einem der Ansprüche 1 bis 11, **dadurch gekennzeichnet, dass** die winkelförmige Lasche (3) aus Metall gefertigt ist.

13. Verwendung des Befestigungselements (1) nach einem der Ansprüche 1 bis 12 zur Fixierung von Anschlagpunkten (7), die insbesondere zur Aufnahme von dynamischen Lasten geeignet sind, und/oder von statischen Lasten an Metallprofilen (2), insbesondere von Metallständerwänden, Vorsatzschalen oder abgehängten Decken, wobei sich der zweite Schenkel (5) bei einer Verschraubung mit dem Metallprofil (2) elastisch verformt und die Amplitude (30) gegenüber dem unverschraubten Zustand zumindest abschnittsweise reduziert wird.

## Claims

1. Fastening element (1) for the fixation of anchor points (7), which are especially suited to the supporting of dynamic loads, and/or static loads on metal profiles (2), especially those of reinforced steel wall systems, facing formwork, or suspended ceilings, comprising an angle-shaped bracket (3) with a first leg (4) and a second leg (5), wherein the first leg (4) and the second leg (5) form an L shape, wherein at least one connection means (22) is arranged on the first leg (4) for connecting the anchor point (7) and/or the static load to the fastening element (1) and the at least one connection means (22) preferably has an internal thread (8), wherein the second leg (5) is provided with a corrugation (10) at least for a portion, wherein the corrugation (10) has an amplitude (30) which extends out from a plane (31) of the second leg (5) in a direction normal to this plane (31) and is formed by wave peaks (11) and wave valleys (12), wherein points of equal phase of the fundamental wave lie on straight lines, so that the extension of the wave peaks (11) and wave valleys (12) is straight-lined, **characterized in that** the extension direction of the wave peaks (11) and wave valleys (12) encloses with one edge (13) an angle not equal to 90º, measured in the plane (31) of the second leg (5), or runs parallel to the edge (13), while along the edge (13) an inner surface (14) of the first leg (4) and an inner surface (15) of the second leg (5) intersect and wherein the inner surfaces (14, 15) enclose an angle less than 180º, measured in a plane which is normal to the edge (13), and there are two openings provided in the second leg (5) for screwing the second leg (5) to a metal profile (2), which are configured as oblong holes (9, 16).

2. Fastening element (1) according to claim 1, **characterized in that** the corrugation (10) has a constant wavelength (28).

3. Fastening element (1) according to one of claims 1 to 2, **characterized in that** the corrugation (10) extends over the entire second leg (5).

4. Fastening element (1) according to one of claims 1 to 3, **characterized in that** the two oblong holes (9, 16) are curved, and the curvature of the one oblong hole (9) is opposite the curvature of the other oblong hole (16).

5. Fastening element (1) according to claim 4, **characterized in that** the two oblong holes (9, 16) each run along an imaginary circular arc (17, 18) and the imaginary circular arcs (17, 18) have no common center of the circle.

6. Fastening element (1) according to claim 5, **characterized in that** extensions (19, 20) of the imaginary circular arcs (17, 18) each intersect the other imaginary circular arc (17, 18) and/or the extension (19, 20) of the other imaginary circular arc (17, 18).

7. Fastening element (1) according to one of claims 1 to 6, **characterized in that** two threaded sleeves or insert nuts (22) are fixed to the inner surface (14) of the first leg (4) as connection means.

8. Fastening element (1) according to one of claims 1 to 7, **characterized in that** a connection plate (6) is arranged on the first leg (4), in order to enable a planar bearing of the anchor point (7) and/or the static load against the fastening element (1).

9. Fastening element (1) according to claim 8, **characterized in that** the connection plate (6) is formed by the first leg (4).

10. Fastening element (1) according to claim 7 and one of claims 8 to 9, **characterized in that** the connection plate (6) has a mounting opening (23) above each of the inner threads (8) of the threaded sleeves or insert nuts (22) to enable the connecting of the anchor point (7) and/or the static load to the fastening element (1) by a screw fastening.

11. Fastening element (1) according to one of claims 8 to 10, **characterized in that** the connection plate (6) is arranged on a rear side (26) of a can-shaped container (23) or forms this rear side (26), while the can-shaped container (23) furthermore has a front side (25) and an opening (27) is arranged on the front side (25).

12. Fastening element (1) according to one of claims 1 to 11, **characterized in that** the angle-shaped bracket (3) is made of metal.

13. Use of the fastening element (1) according to one of claims 1 to 12, for the fixation of anchor points (7), which are especially suited to supporting of dynamic loads, and/or static loads on metal profiles (2), especially reinforced steel wall systems, facing formwork, or suspended ceilings, wherein the second leg (5) is elastically deformed when screwed together with the metal profile (2) and the amplitude (30) is reduced as compared to the unscrewed state at least for a portion.

## Revendications

1. Élément de fixation (1) pour la fixation de points d'accrochage (7) convenant en particulier pour recevoir des charges dynamiques et/ou de charges statiques sur des profilés métalliques (2), en particulier des parois de montants métalliques, des bardages ou des plafonds suspendus, comprenant une patte en forme d'équerre (3) avec un premier bras (4) et un deuxième bras (5), le premier bras (4) et le deuxième bras (5) formant un L, le premier bras (4) portant au moins un moyen d'assemblage (22) pour assembler le point d'accrochage (7) et/ou la charge statique à l'élément de fixation (1) et l'au moins un moyen d'assemblage (22) présentant de préférence un filetage intérieur (8), le deuxième bras (5) étant muni au moins par zones d'une ondulation (10), laquelle ondulation (10) présente une amplitude (30) qui dépasse d'un plan (31) du deuxième bras (5) dans une direction perpendiculaire à ce plan (31) et est formée par des sommets d'ondulation (11) et des creux d'ondulation (12), des points de même phase de l'ondulation fondamentale étant alignés en ligne droite de sorte que l'étendue des sommets d'ondulation (11) et des creux d'ondulation (12) est rectiligne, **caractérisé en ce que** le sens d'étendue des sommets d'ondulation (11) et des creux d'ondulation (12) forme avec une arête (13) un angle mesuré dans le plan (31) du deuxième bras (5) différent de 90° ou est parallèle à l'arête (13), une surface intérieure (14) du premier bras (4) et une surface intérieure (15) du deuxième bras (5) se croisant le long de l'arête (13) et les surfaces intérieures (14, 15) formant un angle mesuré dans un plan perpendiculaire à l'arête (13) plus petit que 180°, et **en ce que** deux ouvertures réalisées comme des trous oblongs (9, 16) sont prévues dans le deuxième bras (5) pour le vissage du deuxième bras (5) à un profilé métallique (2)

2. Élément de fixation (1) selon la revendication 1, **caractérisé en ce que** l'ondulation (10) présente une longueur d'ondes constante (28).

3. Élément de fixation (1) selon l'une des revendications 1 à 2, **caractérisé en ce que** l'ondulation (10) s'étend sur tout le deuxième bras (5).

4. Élément de fixation (1) selon l'une des revendications 1 à 3, **caractérisé en ce que** les deux trous oblongs (9, 16) sont courbés, la courbure d'un trou oblong (9) étant opposée à la courbure de l'autre trou oblong (16).

5. Élément de fixation (1) selon la revendication 4, **caractérisé en ce que** les deux trous oblongs (9, 16) suivent chacun un arc de cercle imaginaire (17, 18) et **en ce que** les arcs de cercle imaginaires (17, 18) n'ont pas de centre de cercle commun.

6. Élément de fixation (1) selon la revendication 5, **caractérisé en ce que** des prolongements (19, 20) de chacun des arcs de cercle imaginaires (17, 18) coupent l'autre arc de cercle imaginaire (17, 18) et/ou le prolongement (19, 20) de l'autre arc de cercle imaginaire (17, 18).

7. Élément de fixation (1) selon l'une des revendications 1 à 6, **caractérisé en ce que** deux douilles filetées ou écrous encastrés (22) sont fixés sur la surface intérieure (14) du premier bras (4) pour servir de moyens d'assemblage.

8. Élément de fixation (1) selon l'une des revendications 1 à 7, **caractérisé en ce qu'**une plaque de raccordement (6) est fixée sur le premier bras (4) afin de permettre un appui à plat du point d'accrochage (7) et/ou de la charge statique sur l'élément de fixation (1).

9. Élément de fixation (1) selon la revendication 8, **caractérisé en ce que** la plaque de raccordement (6) est formée par le premier bras (4).

10. Élément de fixation (1) selon la revendication 7 et l'une des revendications 8 à 9, **caractérisé en ce que** la plaque de raccordement (6) présente une ouverture de montage (23) au-dessus de chacun des filetages intérieurs (8) des douilles filetées ou des écrous encastrés (22) afin de permettre l'assemblage par vissage du point d'accrochage (7) et/ou de la charge statique à l'élément de fixation (1).

11. Élément de fixation (1) selon l'une des revendications 8 à 10, **caractérisé en ce que** la plaque de raccordement (6) est disposée sur une face arrière (26) d'un contenant en forme de boîte (23) ou forme cette face arrière (26), le contenant en forme de boîte (23) présentant en outre une face avant (25) et une ouverture (27) étant disposée sur la face avant (25).

12. Élément de fixation (1) selon l'une des revendications 1 à 11, **caractérisé en ce que** la patte en forme d'équerre (3) est fabriquée en métal.

13. Utilisation de l'élément de fixation (1) selon l'une des revendications 1 à 12 pour la fixation de points d'accrochage (7) convenant en particulier pour recevoir des charges dynamiques et/ou de charges statiques sur des profilés métalliques (2), en particulier des parois de montants métalliques, des bardages ou des plafonds suspendus, dans laquelle le deuxième bras (5) se déforme lors du vissage au profilé métallique (2) et l'amplitude (30) est réduite au moins par zones par rapport à l'état non vissé.
